Europäisches Patentamt

European Patent Office

Office européen des brevets

(11) Numéro de publication: **0 165 097**
**A1**

## (12) DEMANDE DE BREVET EUROPEEN

(21) Numéro de dépôt: **85400818.2**

(22) Date de dépôt: **26.04.85**

(51) Int. Cl.⁴: **B 44 D 3/00**
**G 05 D 11/00, B 01 F 15/04**

(30) Priorité: **15.05.84 FR 8407463**

(43) Date de publication de la demande:
**18.12.85 Bulletin 85/51**

(84) Etats contractants désignés:
**AT BE CH DE FR GB IT LI LU NL SE**

(71) Demandeur: **COFIDEP S.A.**
**Tour Aurore Place des Reflets**
**F-92080 Paris La Défense 2(FR)**

(72) Inventeur: **Falieu, Claude**
**16, Boulevard Colbert**
**F-92330 Sceaux(FR)**

(74) Mandataire: **Dubost, Thierry Pierre**
**SOCIETE CHIMIQUE DES CHARBONNAGES Service**
**Propriété Industrielle B.P. 57**
**F-62670 Mazingarbe(FR)**

(54) **Procédé de préparation de peinture et dispositif pour sa mise en oeuvre.**

(57) Le procédé consiste à mélanger dans un récipient au moins (2) composants choisis parmi:

(a) Une base brillante super blanche contenant:
- de 15 à 30 parties en volume d'au moins un pigment opacifiant blanc (A), et
- de 70 à 85 partie en volume d'au moins un liant (B)

(b) une base mate super blanche contenant:
- le même nombre de parties en volume de pigment (A) que la base brillante super blanche,
- de 15 à 25 parties en volume d'au moins une charge non opacifiante (C), et
- de 45 à 70 parties en volume d'au moins un liant (B)

(c) une base brillante incolore comprenant au moins un liant (B) mais ne comprenant ni pigment (A) ni charge (C),

(d) une base mate incolore contenant:
- autant de parties en volume de charge (C) que la base mate super blanche contient de parties en volume de pigment (A) et de charge (C) et
- le complément à 100 parties en volume d'au moins un liant (B), ledit mélange comportant au moins une des 2 bases super blanches.

Le dispositif comprend (4) pompes doseuses à piston, de même géométrie, chacune étant alimentée à partir d'un réservoir et munie, à son refoulement, d'une tubulure distribuant le composant dosé dans le récipient de mélange, chaque pompe doseuse étant affectée à chaque base susceptible de constituer l'un des composants du mélange, et est caractérisé en ce qu'il comporte des moyens (M) agissant sur la course des pistons des pompes doseuses, pour régler corrélativement les quantités de bases délivrées par lesdites pompes doseuses, de façon à ce que le volume total délivré par l'ensemble des (4) pompes doseuses demeure constant.

**0165097**

La présente invention concerne un procédé de préparation d'une peinture blanche ou colorée ayant un niveau d'opacité et un niveau de brillance prédéterminés, et un dispositif pour sa mise en oeuvre.

Il est connu par le brevet français n° 2.106.944 de préparer une peinture de nuance choisie par mélange de 2 à 6 peintures de coloris standard.

La coloration de peintures blanches, sur le lieu de vente ou en usine, est également une opération connue. Le résultat est obtenu en incorporant des colorants spéciaux, calibrés en puissance et en tonalité, à des peintures dont la teneur en pigment opacifiant blanc est échelonnée d'une manière logique entre 100 % de la valeur habituelle (opacité normale) et 0 % (peinture incolore ne possédant pas de pouvoir couvrant).

Un système mondialement utilisé préconise 5 niveaux de blanc usuels, en progression arithmétique, dans lesquels on introduit le ou les colorants choisis de façon à obtenir la teinte souhaitée. Ces 5 niveaux de blanc usuels correspondent à un même niveau de brillance spéculaire pour le film sec obtenu. Si l'on souhaite disposer d'une peinture donnant un film sec de brillance spéculaire inférieure (plus mat) ou supérieure (plus brillant) il faut donc préparer, pour chaque valeur de brillance spéculaire retenue, 5 niveaux d'opacité variable.

A côté de ces peintures de base blanches il peut exister des peintures de bases colorées avec des niveaux de pigmentation échelonnés. On admet couramment qu'il faut de 5 à 20 peintures de base de couleur et concentration pigmentaire échelonnées pour réaliser de 1000 à 2000 teintes dans le même type de peinture (ayant donc le même niveau d'opacité).

On rappelle qu'une peinture peut être caractérisée par les propriétés suivantes :
- pouvoir masquant (= opacifiant) par unité de volume ou de poids, mesuré selon la norme NFT 30 075,
- brillance spéculaire du film sec (généralement mesurée selon la norme NF T 30 064)
- viscosité et, le cas échéant,
- d'autres caractéristiques d'aptitude à l'emploi telles que la résistance à la lumière, aux intempéries, aux lavages et lessivages, etc...

La teinte souhaitée pour la peinture prête à l'emploi est obtenue en incorporant aux peintures de base blanches les colorants spéciaux selon des rapports volumétriques ou pondéraux tels que les propriétés rappelées ci-dessus soient maintenues. Les dosages, d'une part de la peinture de base blanche et, d'autre part des colorants spéciaux sont réalisés :

- pour les peintures de base par le fabricant de peinture qui réalise des gammes échelonnées d'emballages, par exemple 1 litre, 4 litres et 20 litres contenant les quantités de peinture de base blanche destinées à produire, après incorporation des colorants, un volume terminé de 1, 4 ou 20 litres de peinture colorée,

- pour les colorants par le manipulateur sur le lieu de vente, ou en usine, à l'aide d'un équipement de dosage le plus souvent volumétrique.

Un inconvénient important de ce système antérieur provient de la manipulation d'un nombre important d'emballages préconditionnés avec une peinture de base ayant un niveau d'opacité et un niveau de brillance donnés. Pour un type d'emballage de volume donné il faut prévoir en général 5 niveaux d'opacité et 5 niveaux de brillance soit 25 types de peintures de base blanche. On remarquera de plus que l'obtention d'une peinture ayant un niveau d'opacité supérieur à 100 % (c'est-à-dire d'une peinture de très forte opacité) n'est pas possible selon ce système, ou tout au moins n'est pas aisément réalisable, en particulier sur le lieu de vente.

On notera en outre que, étant donné que certains pigments ou colorants peuvent agir sur l'opacité ou la brillance d'une peinture donnée, ce système doit prévoir, en fonction des colorants utilisés, la mise en oeuvre de peintures de base blanches différentes dans leur degré d'opacité et/ou leur degré de brillance, selon la teinte finale souhaitée.

On remarquera enfin que le procédé antérieur conduit à introduire au-dessus d'une certaine quantité de peinture de base blanche une faible quantité de colorant. De façon à réaliser l'homogénéisation essentielle de la peinture, on est amené à soumettre le récipient dans lequel a eu lieu l'admission de colorant à une agitation très énergique. Ce problème se pose de façon plus ou moins prononcée selon que les colorants sont distribués dans le récipient contenant la peinture de base blanche séquentiellement (comme dans le brevet français n° 2 351 393 qui décrit un appareil de sélection et de dosage d'ingrédients fluides comprenant plusieurs pompes doseuses de type volumétrique disposées suivant un trajet circulaire, et un dispositif rotatif de balayage disposé au centre de l'arc de cercle et commandant successivement chaque pompe doseuse qui est sélectionnée) ou simultanément (comme dans le brevet des Etats-Unis n° 4 101 055 qui décrit un dispositif comprenant une pluralité de réservoirs à colorants et une pluralité de pompes doseuses, chacune étant reliée à un réservoir, dans lequel un système de pompage prélève un volume déterminé de colorant dans chaque pompe concernée puis restitue ce volume, simultanément avec ceux contenus dans les autres pompes ; chaque pompe doseuse est commandée par un vérin hydraulique relié à un moteur hydraulique commun à toutes les pompes ; le réglage du volume aspiré dans chaque pompe a lieu par limitation de la course du piston).

L'invention remédie, en tout ou partie, aux défauts des systèmes connus. Elle évite l'utilisation de peintures déjà mises à la teinte dans des coloris standards, d'un grand nombre de conditionnements pourvus de peintures de base blanches dans des gammes d'opacité et de brillance variées et réduit donc ainsi de façon considérable le nombre de produits de base à utiliser et gérer. Elle permet de préparer des peintures ayant des niveaux d'opacité, de brillance et le cas échéant de nuance très variés et prédéterminés, y compris des peintures possédant un niveau d'opacité renforcé, ce que ne permettaient pas les systèmes connus.

La présente invention a pour objet un procédé de préparation d'une peinture ayant un niveau d'opacité et un niveau de brillance prédéterminés caractérisé en ce qu'il consiste à mélanger dans un récipient au moins 2 composants choisis parmi :

(a) une base brillante super blanche contenant :
- de 15 à 30 parties en volume d'au moins un pigment opacifiant blanc (A), et
- de 70 à 85 parties en volume d'au moins un liant (B)

(b) une base mate super blanche contenant :
- le même nombre de parties en volume de pigment (A) que la base brillante super blanche,
- de 15 à 25 parties en volume d'au moins une charge non opacifiante (C), et
- de 45 à 70 parties en volume d'au moins un liant (B)

(c) une base brillante incolore comprenant au moins un liant (B) mais ne comprenant ni pigment (A) ni charge (C),

(d) une base mate incolore contenant :
- autant de parties en volume de charge (C) que la base mate super blanche contient de parties en volume de pigment (A) et de charge (C) et
- le complément à 100 parties en volume d'au moins un liant (B),
ledit mélange comportant au moins une des 2 bases super blanches.

Selon la teneur en pigment opacifiant blanc (A) de la base brillante super blanche, selon la teneur en charge non opacifiante (C) de la base mate super blanche, le procédé permet donc d'utiliser une grande variété de bases de départ. Mais il est nécessaire, afin que le résultat désiré (niveaux d'opacité et de brillance) soit obtenu que :

- les 2 bases super blanches aient la même teneur en pigment opacifiant blanc, donnant ainsi après application soit de chacune de ces bases, soit de l'un quelconque de leurs mélanges des films qui ont la même opacité,

- les 2 bases incolores ne contiennent pas de pigment opacifiant (niveau d'opacité nul),

- la base brillante super blanche et la base brillante incolore aient la même teneur en liant (B), donnant ainsi après application soit de chacune de ces bases, soit de l'un quelconque de leurs mélanges des films dont la brillance spéculaire est la même et de préférence la plus élevée possible,

- la base mate super blanche et la base mate incolore aient la même teneur en liant, et la même teneur en matières pulvérulentes (pigment opacifiant et/ou charge non opacifiante) pour la même raison que ci-dessus, mais donnant de préférence la brillance spéculaire la plus faible possible.

On dispose ainsi d'un système à 4 composants de départ qui par mélange de 2, 3 ou 4 permet d'obtenir une peinture de niveaux d'opacité et de brillance prédéterminés.

On comprendra aisément que, dans le cas du mélange de 2 bases, l'une de ces bases doit être super blanche car le mélange de 2 bases incolores ne fournit pas une peinture utilisable en pratique.

La teneur en pigment opacifiant blanc de la base super blanche brillante et de la base super blanche mate, qui est la même pour un système donné, est telle qu'elle ne correspond pas à un niveau d'opacité couramment utilisé dans la pratique, mais à un niveau supérieur.

Cette particularité permet, éventuellement, de satisfaire une demande ponctuelle de ces bases et de leurs mélanges. Elle permet particulièrement, après mélange dans des proportions calculées, avec l'une ou l'autre ou les 2 bases incolores, d'obtenir des peintures fournissant un film d'opacité renforcée, en plus bien entendu de toutes les peintures donnant des films d'opacité normale ou légèrement inférieure à la normale (en deçà d'une certaine teneur en pigment opacifiant blanc, le produit obtenu n'est pas utilisable en l'état comme peinture prête à l'emploi).

Le pigment opacifiant blanc est de préférence le dioxyde de titane rutile, qui sera appelé ci-après $TiO_2$.

En ce qui concerne la brillance spéculaire, la teneur en liant des 2 bases brillantes, super blanche et incolore, est avantageusement telle que le film obtenu possède la brillance spéculaire la plus élevée possible selon la nature du liant utilisé.

De même la teneur en liant des 2 bases mates, super blanche et incolore, est avantageusement telle que le film obtenu possède la brillance spéculaire la plus faible possible selon la nature du liant utilisé.

Bien évidemment pour un système donné de 4 bases selon l'invention, le ou les liants sont de même nature et compatibles entr'eux. On peut donc ainsi mettre en oeuvre des systèmes à base de liants diluables par l'eau (liant acrylique, styrène-acrylique) ; la brillance spéculaire, mesurée selon la norme NFT 30 064, peut dans ce cas varier de 2 à 80. L'invention permet également de mettre en oeuvre des liants diluables par au moins un solvant non miscible à l'eau, tels les liants glycérophtaliques, oléoglycérophtaliques, etc... Dans ce cas la brillance spéculaire peut varier de 5 à 95.

On a postulé ci-dessus que, en particulier, les 2 bases super blanches, mate et brillante, doivent avoir la même teneur en pigment opacifiant blanc. Cette restriction est pratiquement imposée par la mise en oeuvre du procédé. Il est certain que l'on peut mélanger une base brillante super blanche donnant un niveau d'opacité élevé au film, avec une base mate super blanche donnant un niveau d'opacité normal et obtenir ainsi un mélange conduisant, par exemple, à un film d'opacité renforcée. Néanmoins la mise en oeuvre de cette possibilité est très compliquée, puisque non seulement le niveau d'opacité variera, mais également le niveau de brillance. Et on préfère que le mélange de 2 bases données n'ait d'effet que sur un seul de ces 2 critères.

Le mélange de 2, 3 ou des 4 bases est réalisable par tout moyen connu, pondéral ou volumétrique, les bases étant homogènes au moment de l'emploi. Ainsi on peut distribuer successivement dans un récipient 2, 3 ou 4 fractions du volume total à obtenir, chaque fraction étant constituée d'une des 2, 3 ou 4 bases choisies, en quantité telle que le film obtenu possède, après application, les niveaux d'opacité et de brillance cherchés. Pour un modèle de récipient donné on réalise ainsi un mélange à volume constant. Après remplissage, le mélange doit être homogénéisé par agitation intense. C'est pourquoi l'on préfère réaliser le mélange par admission simultanée des composants choisis dans le récipient, le principe du volume constant étant respecté. On a constaté alors que cette admission simultanée provoque un début d'homogénéisation et que l'agitation ultérieure ne doit pas être nécessairement aussi intense.

Afin de faciliter l'homogénéisation précitée et la mise en oeuvre, les 4 bases ont avantageusement la même viscosité et la même rhéologie.

En vue d'illustrer de façon non limitative le procédé selon l'invention on donnera maintenant un exemple d'utilisation d'un système de 4 bases, à base de liant acrylique diluable à l'eau comprenant une résine acrylique en dispersion et des additifs couramment utilisés (tensio-actifs, dispersants, agent de conservation, solvant de coalescence). La composition du liant est la même pour les 4 bases qui sont :

1) une base brillante super blanche (SBB) contenant 20 parties (à moins d'indication contraire, les parties sont des parties en volume) de $TiO_2$ et 80 parties de liant, donnant un film de brillance spéculaire (BS) égale à 80,

2) une base mate super blanche (SBM) contenant 20 parties de $TiO_2$, 20 parties d'une charge minérale non opacifiante ($CaCO_3$, silicate) et 60 parties de liant, donnant un film de brillance spéculaire égale à 2,

3) une base brillante incolore (BI) contenant 80 parties de liant et 20 parties d'un additif rhéologique (composant organique soluble thixotrope) tel que cette base a la même viscosité (à 15 % près) que les 3 autres bases,

4) une base mate incolore (MI) contenant 60 parties de liant et 40 parties de charge minérale non opacifiante.

On obtient :

- par mélange des 2 bases super blanches, des peintures blanches ayant un niveau d'opacité très élevé ; un mélange de 83,33 % de SBB et 16,66 % de SBM donne un satiné fort (BS = 38) ; un mélange de 66,66 % de SBB et 33,33 % de SBM donne un satiné faible (BS = 18),

- par mélange de 33,33 % de SBB, 51,66 % de SBM et 15 % de MI on obtient après application un satiné faible à opacité normale,

- par mélange de 5,5 % d'un mélange comprenant 66,66 % de BI et 33,33 % de MI, et de 94,5 % d'un mélange comprenant 66,66 % de SBB et 33,33 % de SBM on obtient après application un film satiné faible à opacité renforcée. Les pourcentages sont des % en volumes.

Tous les niveaux d'opacité et de brillance spéculaire peuvent être obtenus. Cependant pour des raisons pratiques on est amené à limiter le nombre de mélanges afin que ceux-ci correspondent à des produits commerciaux donnant satisfaction, par exemple 4 niveaux de brillance (brillance spéculaire de 2, 18, 38 et 80) et 2 niveaux d'opacité (normale et renforcée).

Le procédé permet ainsi de préparer des peintures blanches de caractéristiques prédéterminées. Il permet aussi la mise à la teinte de façon précise en utilisant, en plus de 2, 3 ou, de préférence, 4 des bases ci-dessus, les colorants spéciaux adaptés à la nature du liant. Pour une peinture blanche, obtenue par le procédé décrit précédemment, le niveau d'opacité prédéterminé est obtenu en agissant sur le rapport Base super-blanche/Base incolore.

En prédéterminant une couleur à réaliser à partir de colorants

0165097

spéciaux et de peinture blanche, il est nécessaire, ainsi qu'il a été décrit ci-dessus page 2, de disposer de récipients prédosés d'au moins 5 niveaux d'opacité et ceci pour chaque niveau de brillance souhaité. Ces niveaux d'"opacité blanche" sont complétés par l'opacité apportée par le colorant indépendamment de la couleur apparente résultant du rapport pigmentaire Blanc/pigment coloré.

Selon la nature et la concentration des pigments entrant dans la composition des colorants, selon la hauteur de ton de la couleur retenue, les quantités respectives de bases blanches, bases incolores, colorants spéciaux, seront variables pour obtenir un même niveau d'opacité et particulièrement les deux niveaux (normal et renforcé) évoqués plus haut, pour les peintures blanches.

Dans les procédés existants, évoqués page 1, l'échelonnement, limité dans la pratique commerciale du stockage à 5 à 10 niveaux, conduit à l'utilisation d'un colorant blanc concentré, permettant de réaliser les rapports intermédiaires entre ces 5 ou 6 niveaux préétablis.

De plus, le volume de colorants spéciaux, "colorés" ou blanc étant variable pour une même base préconditionnée, la quantité de peinture finie colorée est infiniment variable.

Le procédé décrit permet de réaliser une quantité constante de peinture prête à l'emploi en mettant en oeuvre un liquide compensateur, agissant comme un "colorant incolore". Ce liquide, constitué de solvants ou diluants compatibles avec le ou les liants utilisés, est thixotrope ou épaissi avec des adjuvants appropriés.

Ce liquide compensateur permet de maintenir constante la quantité de "colorants + compensateur" ajoutée à une quantité également constante de base. On obtient ainsi une quantité constante de peinture prête à l'emploi. On peut choisir, par exemple, de fixer à 90 % du volume de peinture colorée à préparer la quantité de mélange de bases, et à 10 % de ce même volume, la quantité de mélange de colorants et de compensateur.

L'opacité obtenue par le mélange de : bases blanches (1 ou 2), bases incolores (1 ou 2), colorants (1 à 5), liquide compensateur, pourra être préétablie aux deux niveaux d'opacité précités (normal et renforcé).

Un programme de calcul, prenant en compte les opacités relatives de chaque élément à doser permet, pour une nuance donnée définie qualitativement par les colorants à utiliser, d'obtenir la composition quantitative à réaliser.

Avantageusement le colorant est admis simultanément avec les bases dans le récipient où doit être effectué le mélange. De même le liquide compensateur est avantageusement admis simultanément avec le ou les colorants et les bases.

Dans le cas des peintures diluables à l'aide d'un solvant non aqueux, on préfère que l'agent siccatif nécessaire au séchage de ce type de peinture (liant séchant par oxydation) ne soit présent dans aucune des 4 bases, afin d'éviter par exemple la formation de peaux, mais soit admis simultanément avec tous les composants de la peinture dans le récipient de mélange. Dans le cas des peintures de ce type le liquide compensateur comprend avantageusement un solvant ou diluant, des agents épaississants et thixotropants.

Le procédé selon l'invention permet, par exemple, en utilisant 4 bases, un liquide compensateur et 12 à 14 colorants (soit moins de 20 composants stockés) de préparer 1000 nuances de peintures dans 4 niveaux de brillance et 2 niveaux d'opacité, soit 8000 peintures différentes.

Le procédé selon l'invention, pour l'obtention de peintures blanches ou colorées, peut être mis en oeuvre manuellement. On préfère, afin de minimiser les sources d'erreurs, le mettre en oeuvre de façon automatique.

Un autre objet de la présente invention concerne un dispositif pour la mise en oeuvre du procédé décrit ci-dessus, réalisant la distribution automatique de 2 ou 4 des bases de façon à obtenir un niveau d'opacité et un niveau de brillance prédéterminés, compte tenu de la valeur de ces mêmes niveaux pour chacune des 4 bases. Ce dispositif comprend 4 pompes doseuses à piston, de même géométrie, chacune étant alimentée à partir d'un réservoir et munie, à son refoulement, d'une tubulure distribuant le composant dosé dans le récipient de mélange, chaque pompe doseuse étant affectée à chaque base susceptible de constituer l'un des composants du mélange, ledit dispositif étant caractérisé en ce qu'il comporte des moyens (M) agissant sur la course des pistons des pompes doseuses, pour régler corrélativement les quantités de bases délivrées par lesdites pompes doseuses, de façon à ce que le volume total délivré par l'ensemble des 4 pompes doseuses demeure constant.

Chaque pompe doseuse comprend un clapet à l'aspiration et un clapet au refoulement. Elle est soit à simple effet soit à double effet.

Par "corrélativement" on entend que les moyens agissant sur la course des pistons des pompes doseuses sont tels que, par rapport à une position de référence donnée (par exemple celle où chaque pompe est réglée pour distribuer le quart du volume total à obtenir), si l'on augmente la somme des volumes des bases (a) et (b) on diminue automatiquement de la même quantité la somme des volumes des bases (c) et (d), si l'on augmente le volume délivré de base (a) on diminue automatiquement de la même quantité le

9 0165097

volume délivré de base (b), si l'on augmente le volume délivré de base (c) on diminue automatiquement de la même quantité le volume délivré de base (d).

Avantageusement chaque pompe doseuse est mue par un vérin hydraulique et le piston de chaque vérin et celui de la pompe doseuse associée sont disposés séparément chacun dans un corps. Cette disposition particulière permet d'éviter la pollution des bases par le fluide hydraulique en cas de fuite.

Avantageusement encore, l'axe de chaque vérin et l'axe de la pompe doseuse associée sont reliés au moyen d'un raccord à démontage rapide à pas inversé, facilitant ainsi la maintenance et le remplacement rapide de la pompe ou du vérin défectueux.

Le dispositif selon l'invention sera maintenant décrit par référence aux figures en annexe où :

- la figure 1 représente une vue générale schématique du dispositif.
- la figure 2 représente une vue en perspective d'un mode de réalisation du système de commande automatique des courses des pistons des pompes doseuses.

Chaque pompe doseuse (1), (2), (3) et (4), à simple effet, est munie de 2 clapets (1a) (1b), (2a) (2b), (3a) (3b), (4a) (4b) et est mue au moyen d'un vérin hydraulique (5), (6), (7) et (8) dont l'axe du piston (9), (10), (11) et (12) communique un mouvement de même amplitude à l'axe de la pompe, donc au piston (13), (14), (15) et (16) de la pompe qu'il actionne. L'axe du piston de la pompe et l'axe du piston du vérin sont reliés par un raccord à démontage rapide à pas inversé (17), (18), (19) et (20). Les pistons du vérin et de la pompe doseuse associée sont disposés séparément chacun dans un corps. Chaque piston de vérin est muni, sur la face du piston du vérin opposée à la face portant l'axe, d'une tige de commande (21), (22), (23) et (24) dont la course est égale à la course du piston de la pompe doseuse associée. Les moyens de réglage des courses des tiges de commande sont tels que, par rapport à une position de référence, telle que représentée sur la figure (1a) où les 4 tiges de commande ont la même course possible (h) et permettent à chaque pompe de délivrer la même quantité de base (par action du fluide hydraulique le piston du vérin, donc le piston de la pompe associée qui à l'origine est en butée au point bas monte d'une hauteur h ; par inversion de la pression du fluide hydraulique chaque pompe délivre un volume q correspondant à la course h de la tige de commande, et donc de son piston), étant entendu que les 4 pompes (1) à (4) ont la même géométrie. On obtient ainsi un mélange équivolumique de chacune des 4 bases, ayant un niveau d'opacité et un niveau de brillance prédéterminés.

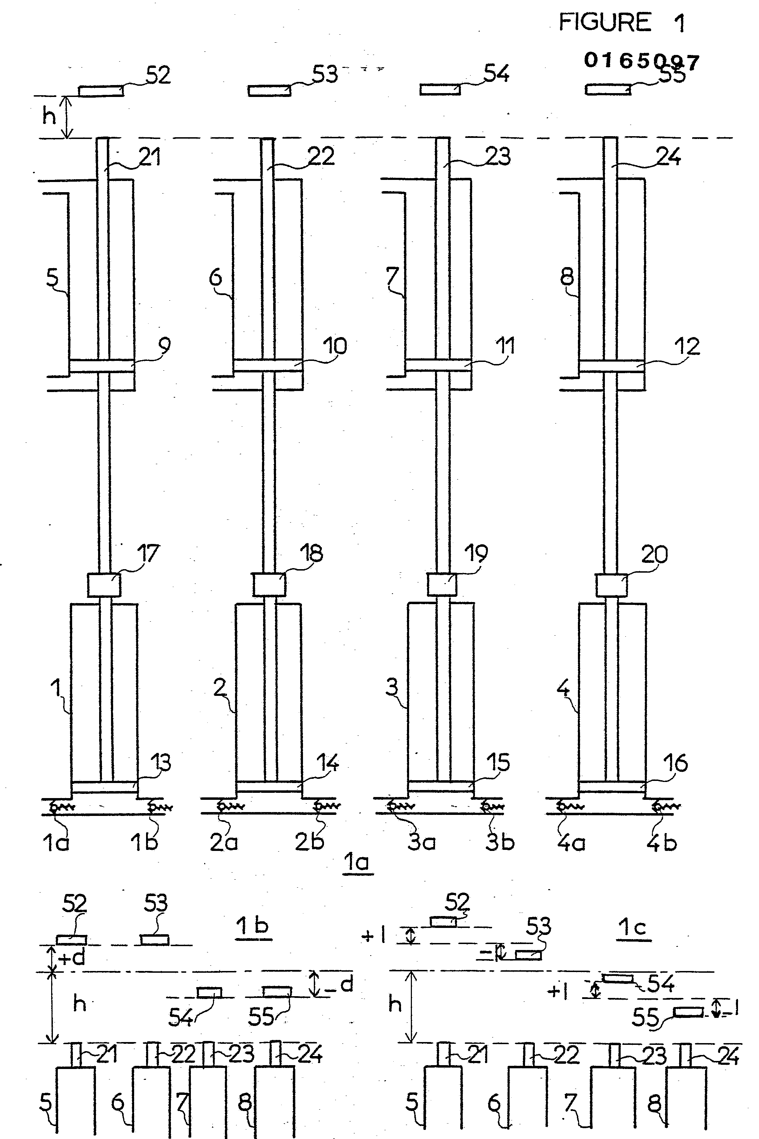

Si l'on souhaite renforcer l'opacité du mélange obtenu on procéde comme suit, étant entendu que la pompe (1) délivre la base (a) (SBB), la pompe (2) délivre la base (b) (SBM), la pompe (3) délivre la base (c) (BI) et la pompe (4) délivre la base (d) (MI), par référence à la figure 1b : les moyens pour régler la course des tiges de commande sont décalés d'une distance +d pour les tiges (21) et (22) et -d pour les tiges (23) et (24) : ainsi le volume total délivré est le même que précédemment.

Par rapport à la position précédente on souhaite maintenant obtenir un mélange de même opacité mais de brillant supérieur (figure 1c) les moyens pour régler la course des tiges de commande sont alors décalés d'une longueur +1 pour les tiges (21) et (23) et d'une longeur -1 pour les tiges (22) et (24) : ainsi le volume total délivré est encore le même que précédemment.

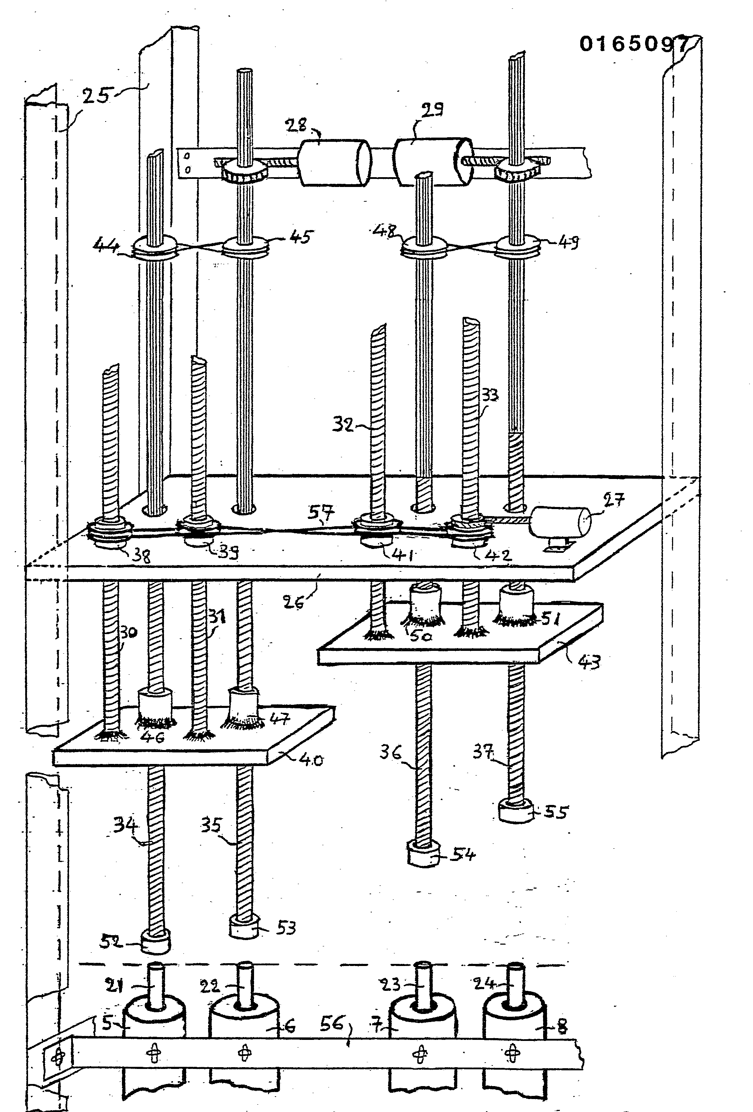

En référence à la figure 2 en annexe les moyens pour régler corrélativement les courses des pistons des pompes doseuses consistent, selon un mode de réalisation de l'invention, en un système comprenant un bâti (25) sur lequel est fixée une plaque-support (26) sur laquelle est monté un premier moteur (27). Deux autres moteurs (28) et (29) sont solidaires du bâti (25). La plaque-support (26) est traversée par 8 orifices dans lesquels sont engagées, sans frottement, 8 tiges filetées (30) à (37) parallèles entre elles ; les tiges filetées (30) à (33) ont le même diamètre ; les tiges filetées (34) à (37) ont le même diamètre ; avantageusement les 8 tiges filetées ont le même diamètre. Les tiges (30) et (31) sont déplaçables simultanément en translation le long de leur axe et dans le même sens au moyen de bagues filetées (38) et (39) engagées dans la plaque-support (26) mais libres en rotation autour de leurs axes, et mues par le moteur (27). Une extrémité des tiges (30) et (31) est libre, l'autre est fixée à une plaque (40) par tout moyen connu (soudure, boulonnage).

Les tiges (32) et (33) sont déplaçables simultanément en translation le long de leur axe et dans le même sens au moyen des bagues filetées (41) et (42) engagées dans la plaque-support (26) mais libres en rotation autour de leurs axes, et mues par le moteur (27). Les bagues filetées (38), (39), (41) et (42) ont le même diamètre externe et les bagues filetées (41) et (42) tournent dans un sens inverse de celui des bagues filetées (38) et (39) par l'intermédiaire de la courroie (57). Une extrémité des tiges (32) et (33) est libre, l'autre est fixée à une plaque (43) par tout moyen connu (soudure, boulonnage). Le plan de la plaque (40) est parallèle au plan de la plaque (43). Ainsi par l'action du moteur (27), quand les tiges filetées (30) et (31) font monter la plaque (40), les tiges filetées (32) et (33) font descendre la plaque (43) de la même distance, et réciproquement.

Les tiges filetées (34) et (35) sont mues en rotation, en sens inverse l'une de l'autre, au moyen du moteur (28) par l'intermédiaire des poulies (44) et (45) ayant le même diamètre, traversent librement la plaque-support (26) puis la plaque (40) par l'intermédiaire des bagues filetées (46) et (47) soudées à la plaque(40). Les sens de rotation des tiges (34) et (35) étant inversés n'ont aucun effet sur le déplacement de la plaque (40).

De même les tiges filetées (36) et (37) sont mues en rotation, en sens inverse, au moyen du moteur (29) par l'intermédiaire des poulies (48) et (49) ayant le même diamètre, traversent librement la plaque-support (26) puis la plaque (43) par l'intermédiaire des bagues filetées (50) et (51). Les sens de rotation des tiges (36) et (37) étant inversés, n'ont aucun effet sur le déplacement de la plaque (43).

Les liaisons entre le moteur (27) et les bagues filetées (38) (39) (41) et (42) entre le moteur (28) et les poulies (44) et (45), entre le moteur (29) et les poulies (48) et (49) peuvent être réalisées à l'aide de courroies crantées.

Les extrémités (52), (53), (54) et (55) des tiges filetées (34), (35), (36) et (37) peuvent être munies d'un dispositif de protection non élastique.

Avantageusement les vérins sont reliés les uns aux autres par un système de fixation (56) réglable en hauteur par rapport au bâti (25). Le système de fixation (56) peut être prévu de façon à ce que la position de chaque vérin par rapport aux autres soit réglable avec précision de façon à permettre l'alignement des extrémités des tiges de commande (21) à (24), et à ce que la droite passant par ces extrémités soit parallèle à celle passant par les extrémités des tiges filetées (34) à (37), quand le dispositif doit délivrer un mélange équivolumique de chacune des bases.

Par référence aux figures 1 et 2, on décrira maintenant le fonctionnement du dispositif selon l'invention. On dispose de 4 réserves de bases telles que décrites ci-dessus page 6. A chaque réserve sont associés une pompe et son vérin hydraulique. Les extrémités des tiges de commande (21), (22), (23) et (24) des vérins hydrauliques (5), (6), (7), (8) sont réglées de façon à être alignées quand les pistons (13), (14), (15) et (16) des pompes doseuses (1), (2), (3) et (4) sont tous au point bas. D'autre part le système de dosage est réglé initialement de façon à ce que les deux plaques (40) et (43) soient dans le même plan et que les extrémités (52), (53), (54) et (55) soient alignées, déterminant entre chacune d'elles et l'extrémité de la tige de commande du vérin hydraulique qui lui est affectée, la même distance h.

Sous l'action du fluide hydraulique, chaque piston de vérin (9), (10), (11), (12) est déplacé de la même distance (h) ainsi que chaque piston doseur (13), (14), (15) et (16) qui lui est associé. Le corps de chaque pompe se remplit de la même quantité de base. Au refoulement (inversion du sens de l'action du fluide hydraulique) pour une pompe à simple effet chaque pompe distribue donc la même quantité de base et on obtient ainsi un mélange à volumes égaux des 4 bases. La distance h est réglée en fonction du volume du corps de chaque pompe, chaque pompe ayant la même géométrie, de façon à fournir le quart du volume du récipient le plus petit. Pour des contenants de plus grande capacité, l'opération est répétée autant de fois que nécessaire.

Le réglage du niveau d'opacité de la peinture à obtenir se fait en mettant en marche le moteur (27) de façon à mouvoir les plaques (40) et (43) ; à chaque position de l'ensemble de ces plaques correspond un niveau d'opacité donné (par exemple l'opacité maximale quand la plaque (40) est à sa position haute extrême). Par rapport au plan d'équilibre, si la plaque (40) monte d'une hauteur d, la plaque 43 descend de la même hauteur d. On obtient ainsi un mélange plus riche en SBB et SBM (à volumes égaux) que le précédent.

Pour chaque position respective des plaques (40) et (43) il est possible de varier la distance de chacune des extrémités (52), (53), (54) et (55) des tiges filetées (34), (35), (36) et (37) par rapport à la tige de commande qui lui est associée. Du fait que les mouvements des tiges (34) et (35) d'une part et (36) et (37) d'autre part sont inversés, une diminution de la quantité de base délivrée par le piston (14) est compensée par une augmentation (même valeur absolue) de la quantité délivrée par le piston (13). Il en est de même pour les pistons (15) et (16). Il est donc possible, sans changer le niveau d'opacité, de modifier le niveau de brillance.

Les deux réglages combinés permettent de régler les quantités de chaque base délivrée par chaque pompe de telle façon que le volume total délivré par les 4 pompes conserve une valeur constante.

Le dispositif permet à une seule pompe doseuse de fournir la quantité nécessaire à emplir le conditionnement le plus petit : le volume de chaque corps de pompe est de préférence égal à cette quantité. Il peut également en être une fraction, par exemple la moitié, et l'opération de distribution est alors répétée une fois.

Le dispositif selon l'invention ne doit pas être compris comme

0165097

étant limité à la description du mode de réalisation qui précède. D'autres variantes d'exécution peuvent être envisagées et néanmoins procéder du même principe qui consiste à délivrer un volume global constant de 2 ou 4 bases par limitation corrélative de la course des pistons doseurs. Ainsi le déplacement des tiges filetées (34) à (37) en rotation et en translation suivant leurs axes peut être obtenu, par rapport aux moteurs (28) et (29) fixés sur le bâti et aux poulies (44), (45), (48) et (49) en munissant l'extrémité libre de chaque tige filetée d'un embout cannelé. Les courroies peuvent être remplacées par tout autre système équivalent. Les tiges filetées (30) à (33) peuvent être mues en translation et rotation si les bagues filetées (38), (39), (41) et (42) sont solidaires de la plaque-support (26), si chaque extrémité des tiges (30) à (33) au contact des plaques (40) et (43) est libre en rotation (par exemple sertie dans une butée à billes) et si le moteur (27) agit en rotation sur les tiges filetées elles-mêmes.

Enfin les moteurs (27), (28) et (29) peuvent être asservis au moyen d'informations programmées et être des moteurs à courant continu ou pas-à-pas.

REVENDICATIONS

1. Procédé de préparation d'une peinture ayant un niveau d'opacité et un niveau de brillance prédéterminés caractérisé en ce qu'il consiste à mélanger dans un récipient au moins 2 composants choisis parmi :

(a) une base brillante super blanche contenant :
- de 15 à 30 parties en volume d'au moins un pigment opacifiant blanc (A), et
- de 70 à 85 parties en volume d'au moins un liant (B)

(b) une base mate super blanche contenant :
- le même nombre de parties en volume de pigment (A) que la base brillante super blanche,
- de 15 à 25 parties en volume d'au moins une charge non opacifiante (C), et
- de 45 à 70 parties en volume d'au moins un liant (B)

(c) une base brillante incolore comprenant au moins un liant (B) mais ne comprenant ni pigment (A) ni charge (C),

(d) une base mate incolore contenant :
- autant de parties en volume de charge (C) que la base mate super blanche contient de parties en volume de pigment (A) et de charge (C) et
- le complément à 100 parties en volume d'au moins un liant (B),
ledit mélange comportant au moins une des 2 bases super blanches.

2. Procédé selon la revendication 1 caractérisé en ce que le pigment (A) est le dioxyde de titane rutile.

3. Procédé selon l'une des revendications 1 et 2 caractérisé en ce que le liant (B) est diluable par l'eau.

4. Procédé selon l'une des revendications 1 et 2 caractérisé en ce que le liant (B) est diluable par au moins un solvant non miscible à l'eau.

5. Procédé selon l'une des revendications 1 à 4 caractérisé en ce que lesdits composants sont admis simultanément dans le récipient de mélange.

6. Procédé selon l'une des revendications 1 à 5 caractérisé en ce que au moins un colorant est admis simultanément avec tous les composants de la peinture dans le récipient de mélange.

7. Procédé selon l'une des revendications 1 à 6 caractérisé en ce que la base brillante incolore contient, incorporé au liant (B), un additif rhéologique et présente la même viscosité, à 15 % près, que les 3 autres bases.

8. Procédé selon la revendication 6 caractérisé en ce que au moins un liquide compensateur est admis simultanément avec le(s) colorant(s).

**0165097**

9. Procédé selon la revendication 4 caractérisé en ce que au moins un agent siccatif est admis simultanément avec tous les composants de la peinture dans le récipient de mélange lorsque le liant sèche par oxydation.

10. Dispositif pour la mise en oeuvre du procédé selon la revendication 1, comprenant 4 pompes doseuses à piston, de même géométrie, chacune étant alimentée à partir d'un réservoir et munie, à son refoulement, d'une tubulure distribuant le composant dosé dans le récipient de mélange, chaque pompe doseuse étant affectée à chaque base susceptible de constituer l'un des composants du mélange, ledit dispositif étant caractérisé en ce qu'il comporte des moyens (M) agissant sur la course des pistons des pompes doseuses, pour régler corrélativement les quantités de bases délivrées par lesdites pompes doseuses, de façon à ce que le volume total délivré par l'ensemble des 4 pompes doseuses demeure constant.

11. Dispositif selon la revendication 10, chaque pompe doseuse étant mue par un vérin hydraulique à piston, caractérisé en ce que le piston de chaque vérin et celui de la pompe doseuse associée sont disposés séparément chacun dans un corps.

12. Dispositif selon la revendication 11, caractérisé en ce que l'axe dudit vérin et l'axe de la pompe doseuse associée sont reliés au moyen d'un raccord à démontage rapide à pas inversé.

13. Dispositif selon l'une des revendications 11 et 12, caractérisé en ce que chaque piston de vérin est muni, sur la face opposée à celle portant l'axe, d'une tige de commande.

14. Dispositif selon l'une des revendications 10 à 13, caractérisé en ce que les moyens (M) sont commandés par des moteurs asservis au moyen d'informations programmées.

15. Dispositif selon la revendication 10, caractérisé en ce que les moyens M sont constitués par l'installation spécifique représentée à la figure 2.

FIGURE 1

0165097

PL. I/2

0165097

PL. 2/2

Office européen
des brevets

**RAPPORT DE RECHERCHE EUROPEENNE**

**0165097**
Numéro de la demande

EP 85 40 0818

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| D,A | US-A-4 101 055 (E.J. POITRAS)<br>* En entier *<br><br>--- | 1,10 | B 44 D 3/00<br>G 05 D 11/00<br>B 01 F 15/04 |
| D,A | FR-A-2 106 944 (R.D.T.)<br>* En entier *<br><br>--- | 1,10 | |
| A | US-A-4 403 866 (A.F. FALCOFF)<br>* Revendications *<br><br>----- | 1,10 | |

DOMAINES TECHNIQUES
RECHERCHES (Int. Cl.4)

G 05 D
B 44 D
B 05 C
B 01 F
C 09 D

Le présent rapport de recherche a été établi pour toutes les revendications

| Lieu de la recherche | Date d'achèvement de la recherche | Examinateur |
|---|---|---|
| LA HAYE | 12-08-1985 | DE ROECK R.G. |